# DEMANDE DE BREVET EUROPEEN

(11) **EP 3 415 569 A1**
(43) Date de publication de la demande: **19.12.2018**
(21) Numéro de dépôt: 17000995.5
(22) Date de dépôt: 13.06.2017
(51) Int. Cl.: C08L 97/02

(54) **FABRICATION DES EMBALLAGES, DES PROFILES ET D'AUTRE PRODUITS BIODEGRADABLES**

(71) Demandeur: Société Polymer Industry, 59100 Roubaix (FR)
(72) Inventeur: KAMOUN, Kamel, 59100 Roubaix (FR)

(57) **Abrégé**

Le projet s'inscrit dans la stratégie de fabriquer des produits biodégradables, résistants et à un faible coût de fabrication. Il porte aussi à valoriser un déchet bio-sourcés farine des grignons d'olives, en donnant un procédé claires et des proportions exactes pour obtenir le meilleur résultat.

## Description

Ce projet a pour objectif de développer des produits basés sur un matériau biodégradable susceptible de concurrencer avec les matériaux biodégradables existants dans le domaine de plasturgie. Le matériau mis au point devra répondre au même cahier des charges des anciens matériaux et de plus être biodégradable. Afin d'assurer les différentes fonctionnalités mentionnées ci-dessus, la démarche adoptée consiste à associer une charge bio-sourcée à des différents types de matrices synthétiques comme le polyéthylène basse densité, polyéthylène haute densité, polypropylène, polyvinyle ester appelé aussi PVC, PS (polystyrène) etc.

L'enjeu consistera à trouver une formulation permettant d'obtenir un compromis coût minimal-tenue mécanique. Pour ceci, les efforts agiront sur la nature des charges et sur l'interface matrice-charge.
L'un des enjeux importants de cette étude consiste à mettre au point les conditions permettant d'élaborer des produits biodégradables compétitifs avec les produits actuels. Ceci implique à la fois le développement d'un procédé de transformation adapté mais également celui de nouvelles formulations permettant d'obtenir une bonne adhésion entre charge et matrice. L'évaluation des performances de la structure obtenue se fera à travers la caractérisation de ses propriétés fonctionnelles : propriétés mécaniques et biodégradabilité.

L'impact environnemental pourra être ressenti à différents niveaux :
- En amont, la substitution de polymères synthétiques par des composites à charge agro-ressourcée contribue à préserver les ressources fossiles et à limiter la production de gaz à effet de serre.
- En aval, toutes les matières premières retenues étant connues pour être aisément compostables, elles permettront de valoriser le produit en fin de vie en tant qu'apport de carbone dans le sol.
- Le projet a également un impact environnemental sur le site de production puisque, d'une part, il résoudra les problèmes liés aux déchets abondants non valorisables, et d'autre part, il limitera les risques associés à la longue durée de vie des produits synthétiques.

La description de cette étude se décompose en 4 axes :
La caractérisation de la charge issue du déchet bio-sourcés,
Les procédés de mise en forme du nouveau matériau,
Les produits à base de ce matériau,
Une comparaison avec les produits biodégradables existants.

La connaissance des propriétés caractéristiques des charge est indispensable en vue de leur utilisation dans des composites. Les charges bio-sourcées présentent en général de bonnes propriétés mécaniques, mais leur utilisation est limitée par leur caractère hydrophile et leur faible stabilité thermique. De même, la compatibilisation charges-matrice va dépendre non seulement de la nature des charges mais également de la nature de la matrice de polymère. La grande diversité des charges et fibres naturelles et le large domaine des applications des matériaux composites, sont à l'origine du grand nombre de travaux concernant le développement des matériaux composites à charges naturelles.

Les travaux concernant l'utilisation des charges biomasses comme alternative fibres de verre utilisées traditionnellement dans des matrices polymères thermoplastiques hydrophobes (comme les polyoléfines) ont permis de réaliser des composites « facilement » recyclables.

La limitation de l'utilisation des charges bio-sourcées dans ce type de composite reste le manque de compatibilité entre les charges et la matrice. La nature hydrophile de ces dernières est à l'origine de cette incompatibilité et de leur mauvaise dispersion au sein de la matrice. Les plus souvent, différents traitements des charges sont utilisés afin d'améliorer leur adhésion avec la matrice. Il s'agit de traitements physiques (modifications surfaciques) ou chimiques (greffage, traitements alcalins). Par ailleurs, l'utilisation des matrices, tels que les polyesters thermoplastiques biodégradables comme le PLA, permet d'obtenir des composites entièrement biodégradables. De nombreux travaux traitent de composites à matrice polymère synthétique et des charges bio-sourcées comme le bois plastique WPC.

Cette étude se repose sur l'utilisation de la farine du grignon d'olive comme charge dans les matrices synthétiques déjà citées. Avec sa composition lignocellulosique, la farine GO présente une résistance mécanique remarquable lors de son incorporation dans la structure du composite. La composition chimique est portée sur le tableau 1.

**Le Tableau suivant : Composition chimique de la charge Grignon d'Olives.**

| **Composants** | **Taux (%)** |
|---|---|
| Graisses et cires | 6.8 |
| Pectines | 6.6 |
| Lignine | 37.7 |
| Hémicelluloses | 22.5 |
| Cellulose | 25 |
| Cendre | 1.37 |

La mise en oeuvre des composites nécessite la mixtion de la charge avec la matrice à des températures élevées, supérieures au point de fusion du polymère. Comme une exposition assez prolongée de la charge GO, dans le milieu fondu, peut éventuellement détériorer le caractère lignocellulosioque de la charge, il serait précautionneux de ne pas dépasser la température 200°C au cours de mise en oeuvre.

En observant le comportement de la charge farine de GO, on a remarqué que les liaisons moléculaires entre la cette dernière et la matrice élaborent des interactions à faible énergie ce qui reflète un mauvais accrochage intermoléculaires.
Après divers recherches, l'étude a identifié un copolymère nommé PP-g-AM qui sert à lier parfaitement les matrices synthétiques citées précédemment à la charge farine de GO.
Les pourcentages de chaque constituants du composite sont portées sur le tableau 2.

**Le Tableau suivant : Les pourcentages de chaque constituants du composite.**

| **Les constituants** | **Pourcentages (%)** |
|---|---|
| **Charge Farine GO** | **30-70** |
| **PP-g-AM** | **5** |
| **Matrice synthétique (PE/PS/PP/PVC etc.)** | **65-25** |

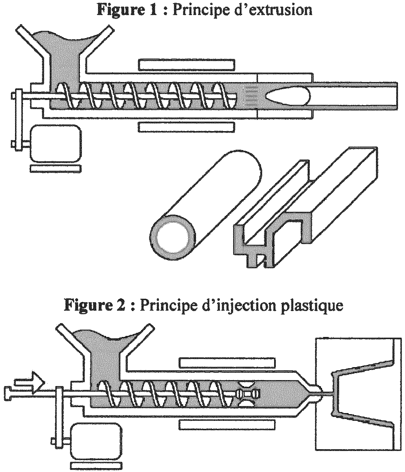

Cette composition a poussé les efforts à chercher un procédé industriel qui transforme cette étude en une série des applications pratiques donnant naissance à des divers produits.
Ce procédé se résume en six étapes ;
- **Le broyage :** il sert à modifier la morphologie des grignons d'olive en une poudre de granulométrie précise (inférieur à 50 µm).
- **Le séchage :** il sert à éliminer l'humidité qui réside dans la farine de GO.
- **Le dosage :** la présente opération sert à quantifier les constituants du composites dans les proportions précises.
- **Le malaxage :** cette opération sert à malaxer et homogénéiser le mélange.
- **L'extrusion :** les produits, initialement sous forme de poudre et granulés, ... sont préchauffés avant d'être introduits en amont d'une vis extrudeuse qui permet de disperser la charge dans la matrice et d'effectuer ainsi un mélange intime entre les constituants (figure 1). Dans le cas d'une production par extrusion, il est possible d'obtenir une gamme entière des produits finis comme les profilés, les gaines, les films, les plaques etc.

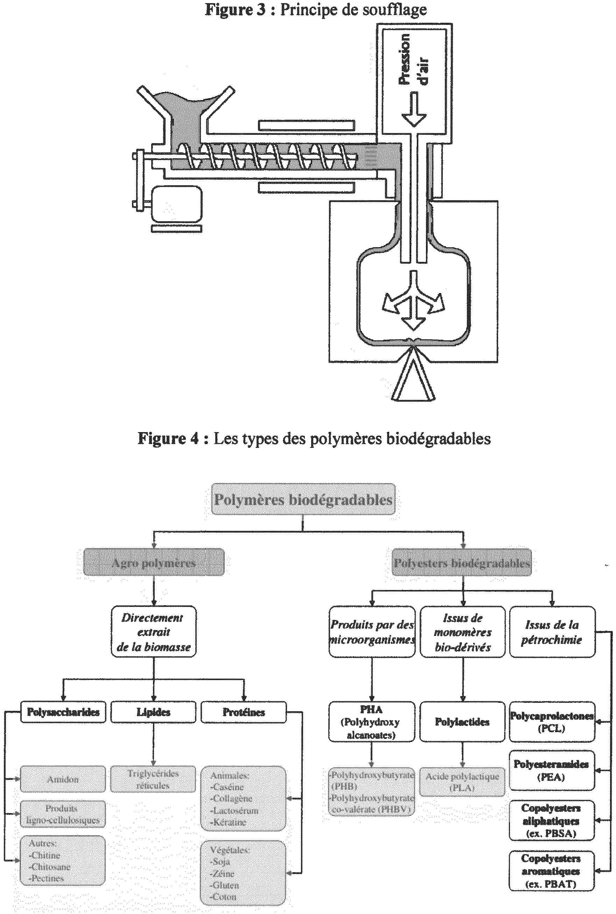

Dans le cas où les produits sont obtenus par injection plastique ou par soufflage, cette opération permet de fournir des granulés chargés par la technique de granulation.
- **L'injection plastique :** Dans le cas des produits obtenus par injection, on introduit les granulés de notre composite dans la trémie de la machine. Ce semi-produit passe par une unité de plastification ou il sera fondu puis injecté dans le moule pour donner la forme finale et obtenir le produit fini (figure 2).
- **Le soufflage :** Dans le cas des produits obtenus par soufflage, on introduit les granulés de notre composite dans la trémie de la machine. Ce semi-produit passe par une unité de plastification ou il sera fondu puis inséré dans le moule sous forme de paraison. Une buse à air comprimé entre au sein de paraison et applique une pression de gonflage ce qui permet de fournir le produit désiré (figure 3).

Les produits possibles à base de composite étudié sont classés suivant la nature de la matrice qui l'englobe ;
- **PEhD :** bouteilles de lait, javellisant, bouteille de détersif, jouets et verres en plastique pour enfants, flacons (détergents, assouplissants, cosmétiques, shampooing)
- **PEbD :** films plastiques souples, sachets, sacs à ordures ménagères, récipients souples pour l'industrie pharmaceutique (gouttes pour les yeux, le nez,...), tubes souples (crèmes dermiques,...), etc.
- **PP :** bouteilles pour bébé, verres à boire pour enfants, plats de type « rubbermaid », sirop, pailles, emballage de produits gras, conditionnement de produits laitiers (yogourts, margarines...), conditionnement des charcuteries, portions individuelles, récipients de préparations à réchauffer, films pour micro-ondes, films (emballage des pâtes, des chips, du pain), conditionnements devant être stérilisés (applications médicales).
- **PVC :** Emballage plastique (pellicule plastique moulante SARAN™ polyvinylidene chloride (PVDC)), films souples, bouteilles et flacons (eaux minérales plates et légèrement gazeuses, vinaigres, huiles, cosmétiques, médicaments), poupées Barbie et jouets souples pour enfants, certaines bouteilles alimentaires compressibles, tissus enduits, tuyauterie et produits de construction et de rénovation.
- **PS :** Emballages alimentaires, barquettes à champignons, tasses à café, vaisselle jetable, couverts de restauration rapide, isolant thermique, plateaux d'aliments au supermarché, protection d'emballage.
- **PC :** Les biberons pour bébé, contenants alimentaires, bouteilles sport rigides dont celles à gros goulot, revêtements des boîtes de conserves alimentaires, scellants dentaires, contenants d'eau de 20 litres.
   Les matériaux biodégradables sont nombreux et diversifiés mais ils peuvent se résumer en deux grandes familles ; les agro-polymères et les polyesters biodégradables (figure 4).
   Dans la famille des polyesters, on retrouve les polyesters qui sont soit produits par des microorganismes, soit issus de monomères bio-dérivés ou de la pétrochimie. Les agro-polymères sont en général directement extraits de la biomasse. Ce sont des polysaccharides comme l'amidon, la cellulose ou des protéines comprenant la caséine ou le gluten. Tous ces types de polymères (à part les polyesters issus de la pétrochimie) proviennent des ressources renouvelables.

Le tableau 3 résume les différents biodégradables qui existent sur le marché.

**Le Tableau suivant : Matériaux biodégradables commerciaux.**

| **Matériau** | **Producteur** | **Composition** |
|---|---|---|
| *Mater-Bi* | Novamont S.p.A (Italie) | Amidon de mais |
| *Solanyl* | Rodenburg Biopolymers (Pays-Bas) | PLA à base de fécule de pomme de terre |
| *Nature Works* | Cargill (USA) | PLA à partir de mais |
| *Lacea* | Mitsui Chemicals (Japon) | PLA |
| *Biomer* | Biomer (Allemagne) | PHB, PLA |
| *Biocycle* | PHB Industrial (Brésil) | PHB |
| *Biopol* | Metabolix Inc (USA) | PHB-PHV (polyhydroxybutyrate, polyhydrohyvalérate) |
| *CAPA* | Solvay Interox (Belgique) | Polycaprolactone (obtenu par transformation d'huile végétale) |
| *Eastar Bio** | Novamont S.p.A (Italie) | Butanediol, acide adipique, acide téréphtalique, acide gras |
| *Bionolle* | Showa Denko (Japon) | Butanediol, acide adipique, acide succinique, acides gras |
| *Ecoflex* | BASF (Allemagne) | Butanediol, acide adipique, acide téréphtalique, acides gras |
| *Ecovio* | BASF (Allemagne) | PLA+Ecoflex |
| *Bio Par* | BIOP Polymer Technologies AG (Allemagne) | Amidon de pomme de terre+Ecoflex |
| *Natureflex* | UCB (Allemagne) | Cellulose |
| *Biocata* | Mazzucchelli (Italie) | Diacétate de cellulose |

Les polyesters biodégradables sont généralement de coût élevé sauf le PLA qui présente un coût réduit et une grande diffusion dans le marché. Les agro-polymères sont des basés sur les biomasses mais ils sont à l'origine des substances naturelles consommables sous forme des produit alimentaires comme l'amidon, le sucre et le maïs. Cette limitation réduit le pouvoir renouvelable de ces matériaux ce qui les rend rarement utilisés comme base des produits plastiques.

En comparant avec les polyesters biodégradable sauf que le PLA, le composite nommé par cette étude est rentable et son coût de production est économique. Alors qu'en comparant avec le PLA, notre matériau étudié valorise le déchet bio-sourcés grignons d'olive, ceci donne un impact environnemental important et bénéfique.
Dans le cas de l'autre famille des matériaux biodégradables, la limitation citée précédemment empêche la plupart de ces matériaux à exister dans le loin future.

## Revendications

1. Des produits innovants permettant de valoriser le déchet des grignons d'olive.

2. Produits selon revendication 1. Avec sa charge lignocellulosique, ont une résistance mécanique excellente.

3. Produits selon revendications 1 et 2. Les matrices convenables sont : les PC, PA, PP, PE, PS, PVC, etc.

4. Produits selon les revendications 1, 2 et 3, ont un faible coût de production.

5. Produits selon les revendications 1, 2, 3 et 4, issus de ce matériau sont biodégradables.

6. Produits selon les revendications 1, 2, 3, 4 et 5, sont concurrents aux autres produits biodégradables.
